# EUROPEAN PATENT SPECIFICATION

(11) **EP 0 781 823 B1**
(45) Date of publication and mention of the grant of the patent: **12.07.2000**
(21) Application number: 96119007.1
(22) Date of filing: 27.11.1996
(51) Int. Cl.: C09J 4/00, C09J 5/02

(54) **Primer composition and adhesion method**
Primerzusammensetzung und Haftungsverfahren
Composition pour couche de fond et méthode d'adhésion

(30) Priority: 28.11.1995 JP 33405195; 29.07.1996 JP 21613796
(43) Date of publication of application: 02.07.1997
(73) Proprietor: Dow Corning Toray Silicone Company, Limited, Tokyo 103 (JP)
(72) Inventor: Nakamura, Akito, Dow Corning Toray Sil. Co., Ltd., Ichihara-shi, Chiba Prefecture (JP); Nakasuji, Katuyoshi, Dow Corning Toray Sil Co, Ltd, Ichihara-shi, Chiba Prefecture (JP); Ushio, Yoshito, Dow Corning Toray Sil. Co., Ltd., Ichihara-shi, Chiba Prefecture (JP)
(74) Representative: Spott, Gottfried, Dr.

(56) References cited:
- EP-A- 0 044 673
- EP-A- 0 565 327
- JP-A- 60 115 661
- JP-A- 62 158 746

## Description

The present invention relates to a primer composition and a method for the adhesion of a silicone rubber to a substrate. In particular, it relates to a primer composition appropriate for the adhesion of a thermosetting silicone rubber to the surface of a variety of substrates.

Numerous primer compositions for promoting the adhesion of silicone rubber to a variety of substrates are known in the art. For instance, primer compositions having organoalkoxysilane or organoalkoxypolysiloxane resin and organic titanic acid esters as the major agents, and primer compositions containing platinum catalysts have been proposed. (See, for example, Japanese Kokai Patent Application Nos. Sho 56[1981]-103264 and Sho 57[1982]-21457, Japanese Kokoku Patent No. Sho 61[1986]-4866, and Japanese Kokoku Patent Nos. Hei 3[1991]-12114 and Hei 3[1991]-54715).

EP-A-0 565 327 discloses a primer composition including an organic silicon compound having in a molecule at least one group of the formula: 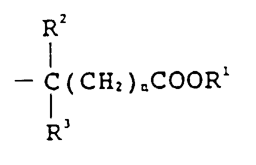 wherein R¹ is a monovalent hydrocarbon group or a group represented by QSi(R⁴O)ₐ(R⁵)₃₋ₐ, Q is a divalent organic group, R⁴ and R⁵ each are a monovalent hydrocarbon group, a is an integer of 0 to 3, R² and R³ each are a hydrogen atom or a monovalent hydrocarbon group, and n is 0, 1 or 2.

However, the primer compositions of the prior art are relatively ineffective when used to promote the adhesion of silicone rubber to substrates of stainless steel, nickel, or other metals, polycarbonate, polybutylene terephthalate, and other plastics or other substrates having inert surfaces.

The present invention overcomes the drawbacks of the prior art in that it provides a primer composition that is effective to promote the adhesion of thermosetting silicone rubbers to the surface of numerous substrates which are generally described as inert. The primer composition of the invention consisting of:
(A) 100 parts, by weight, of an organosilicon compound selected from the group consisting of:
   (1) alkenyltrialkoxysilane represented by the general formula: RSi(OR¹)₃, wherein R is an alkenyl group with at least 3 carbon atoms and R¹ is an alkyl group or an alkoxylated alkyl group; and
   (2) mild hydrolyzates of (1);
(B) 0.01-200 parts, by weight, of a platinum compound; and
(C) 0.1-10.0 parts by weight of an organic titanic acid ester;
(D) a solvent capable of dissolving components (A) - (C); and optional one or more of the compounds selected from
(E) a hydrogen-functional siloxane of the empirical formula

   R⁴ _{d}HₑSiO_{(4-d-e)/2}

   wherein R⁴ is a monovalent hydrocarbon group, d has an average value of 0 ≤ d ≤ 3 and e has an average value of 1 ≤ e ≤ 3, with the proviso that 1 ≤ d+e ≤ 3; a diorganopolysiloxane (F) of the empirical formula

   R⁵ _{f}SiO_{(4-f)/2}

   wherein R⁵ is a monovalent hydrocarbon group, with the proviso that at least 0.2 mol% of said R⁵ groups are alkenyl groups and f is a number between 1.9 and 2.3; an organic peroxide; an inorganic filler; a heat resistance improver; and a pigment.

A solvent (D) in addition to the above-described components (A) - (C) is used to reduce the viscosity of the primer of the invention so that it can be applied in a thin, uniform layer over the desired substrate.

In the method of the present invention, the above described primer is applied to a substrate surface. After evaporation of the solvent, if any, a thermosetting silicone rubber is applied over the primer-coated surface. Thereafter, the silicone rubber is cured, via heating, and firm adhesion is obtained between the silicone rubber and substrate.

It is therefore an object of the present invention to provide a primer composition for the firm adhesion of a silicone rubber on a variety of contacting substrates.

It is another object of the present invention to provide a method for promoting the adhesion of a thermosetting silicone rubber to the surface of a variety of substrates that are generally referred to as "inert."

Component (A) of the primer composition of the invention is an organosilicon compound selected from the group consisting of (1) an alkenyltrialkoxysilane represented by the general formula: RSi(OR¹)₃, wherein R is an alkenyl group with at least 3 carbon atoms and R¹ is an alkyl group or an alkoxylated alkyl group and (2) mild hydrolyzates of (1). R may be an allyl group, a butenyl group, a heptenyl group, a hexenyl group, or other alkenyl group with at least three carbon atoms. Suitable examples of component (A) include allyltrimethoxysilane, allyltriethoxysilane, allyltri(ethoxymethoxy)silane, butenyltrimethoxysilane, hexenyltrimethoxysilane, hexenyltriethoxysilane, and one or more of partially hydrolyzed condensates of these organoalkoxysilanes. Among the aforementioned, allyltrimethoxysilane is preferred.

Component (B) of the composition of the invention, the platinum compound, improves the adhesion between silicone rubber and substrate surface. In particular, it improves the adhesive bond between the silicone rubber and the primer. The platinum compound catalyzes a hydrosilylation reaction between the silicone rubber and primer. Example of component (B) include chloroplatinic acid, alcohol-modified chloroplatinic acid, complexes of platinum and a diketone, platinum-olefin complexes, and complexes formed from chloroplatinic acid and an alkenylsiloxane. Among the aforementioned, the platinum-olefin complexes and the complexes of the chloroplatinic acid and an alkenylsiloxane are preferred because of their high catalytic activities as the hydrosilylation reaction catalysts. In particular, a complex formed from chloroplatinic acid and divinyltetramethyldisiloxane is most preferred.

In the primer composition of the invention, 0.01-200 parts by weight, with respect to 100 parts by weight of component (A), of component (B) is used. If an amount less than 0.01 part by weight is used, the adhesive force between the silicone rubber and the primer-coated film will decrease to an unacceptable level. If the amount of component (B) exceeds 200 parts by weight, the increased adhesive force imparted by this component has already reached an upper limit. Hence, the use of additional quantities would be uneconomical.

Component (C) of the primer composition of the invention, an organic titanic ester, causes the primer composition to "set" so that thermosetting silicone rubber can be applied over the primer. Suitable forms of component (C) include organic titanic acid esters, chelate compounds of titanium, chelate compounds of the silicic acid ester of titanium, and mild hydrolyzates thereof. Specific examples of component (C) include tetraisopropyl titanate, tetra-n-butyl titanate, butyl titanate dimer, tetra (2-ethylhexyl) titanate, diethoxytitanium bis (acetyl)acetonate, titanium diacetylacetonate, titanium diacetylacetonate, titanium octylglucoate, titanium lactate, titanium lactate ethyl ester, titanium triethanolaminate, mild hydrolyzates of the aforementioned and combinations thereof. In the primer composition of the invention, the amount of component (C) that is used with respect to 100 parts by weight of component (A) is in the range of 0.1-100 parts by weight and preferably 2-50 parts by weight.

Component (D) of the primer composition of the invention is a solvent that is added to adjust the viscosity of the primer to an appropriate level for a coating operation. There are no special restrictions on the type of solvent so long as it dissolves components (A) through (C). Suitable solvents include toluene, xylene, heptane, hexane, trichloroethylene, ethyl acetate, and other organic solvents, and hexamethylcyclotrisiloxane, octamethylcyclotetrasiloxane, decamethylcyclopentasiloxane, and other silicone solvents. The amount of solvent used in the primer composition is preferably 10-100 parts by weight with respect to 100 parts by weight of component (A).

Known additives may be added to the primer composition of the present invention to improve the performance thereof, so long as they do not interfere with adhesion promotion. In particular, additives may be used which are represented by the general formula

R⁴ _{d}HₑSiO_{(4-d-e)/2}

where R⁴ is a methyl group, an ethyl group, a propyl group, or other alkyl group; a phenyl group or other aryl group, or other monovalent hydrocarbon group; d has an average value of 0 ≤ d ≤ 3 and e has an average values of 1 ≤ e ≤ 3, with the proviso that 1 ≤ d+e ≤ 3.

In addition, other additives known to promote adhesion including organic peroxides such as 2,5-dimethyl-2,5-di(t-butyl peroxy)hexane, di-t-butyl peroxide, benzoyl peroxide, vinyltris(t-butyl peroxy) silane, trimethyl (t-butyl peroxy) silane, and t-butyl peroxy allyl carbamate may be used.

Still other useful additives include diorganopolysiloxanes represented by the average unit formula of

R⁵ _{f}SiO_{(4-f)/2}

wherein R⁵ is a methyl group, an ethyl group, a propyl group, or other alkyl group, a vinyl group, an allyl group, a hexenyl group, or other alkenyl group, a phenyl group or other aryl group, or other monovalent hydrocarbon group, with the proviso that at least 0.2 mol% of said R⁵ groups are alkenyl groups and f is a number between 1.9 and 2.3. Preferably, the aforementioned dioganopolysiloxanes have a viscosity of at least 5,000 mm²/s (5,000 cS) at 25°C.

Other useful additives include micropowder silica and other inorganic fillers, aliphatic acid salts of cerium, aliphatic acid salts of iron, titanium oxide, carbon black, and other heat-resistance improvers as well as pigments which are all available.

In using the primer composition of the present invention, it is preferable to coat the substrate and permit the primer to air dry for at least 30 minutes before applying a thermally-curable silicone rubber composition over the same.

Silicone rubbers that may be used with the primer composition of the invention include free radical curing compositions that include a diorganopolysiloxane raw rubber, a filler, and an organic peroxide as the major components. Another type of silicone rubber composition that may be used with the primer composition of the invention is an addition-reaction-setting silicone rubber which includes a vinyl group containing diorganopolysiloxane, organo hydrogen polysiloxane, a filler, and a platinum catalyst as the major components.

The primer composition of the present invention can be used to cause a silicone rubber to firmly adhere to the surface of iron, stainless steel, aluminum, nickel, zinc, copper, and a variety of other metals and their alloys, acryl resin, phenol resin, epoxy resin, polycarbonate resin, polybutylene terephthalate resin, alkali-treated Teflon® films, and other synthetic resin materials, glass, and ceramics.

Heretofore, it has been difficult to cause silicone rubber to adhere to certain substrates which have low surface activities. Such substrates include stainless steel, nickel, polycarbonate and polybutylene terephthalate. The primer composition of the present invention permits the adhesion of silicone rubber to these substrates. Thus, potential applications for the primer composition of the invention and associated method include bonding silicone rubber to the metallic drum of a copying machine and the adhesion of a silicone rubber oil seal to a metallic housing.

### Application examples

The present invention is explained below by way of application examples. In the application examples, "parts" and "%" refer to parts by weight and wt%, respectively. The reported viscosities represents the values at 25°C.

### Application Example 1

10 parts of allyltrimethoxysilane were added to 100 parts of n-heptane and uniformly mixed. Next, 2 parts of tetra(n-butyl) titanate were added and uniformly mixed. Next, to this solution, a complex of chloroplatinic acid and divinyltetramethyldisiloxane was added at an amount shown in Table I and uniformly mixed. A primer composition as a uniformly dispersed solution was obtained. This composition was coated on each side of an iron plate, a stainless steel plate, a nickel plate, a polycarbonate plate, a polybutylene terephthalate plate, and an alkali-treated fluorine resin (tetrafluoroethylene-perfluoroalkyl vinyl ether copolymer resin) plate. Prior to coating, each of the aforementioned plates had a piece of cellophane tape affixed to one end. The coated plates were allowed to stand at room temperature for 60 min and then air-dried.

100 parts of dimethylvinylsiloxy-terminated dimethylpolysiloxane having a viscosity of 10,000 mm²/s (10,000 cS), 15 parts of fumed silica with a specific surface of 200 m²/g, 4 parts of hexamethyldisilazane as the surface-treating agent of silica, and 2 parts of water were uniformly mixed. The composition was heated at 170°C for 2 h under vacuum. Thereafter, 1.3 parts of a dimethylsiloxane-methyl hydrogen siloxane copolymer (the content of hydrogen atoms bonded to silicon atoms being 0.7 wt%) with both ends of the molecular chain blocked by trimethylsiloxy groups, and 10 ppm platinum metal in the form of chloroplatinic acid, were added and mixed to prepare an addition-reaction-setting silicone rubber composition. This silicone rubber composition was applied to the primer-coated surface of the previously mentioned coated substrates at a thickness of 2 mm. The silicone rubber was then cured under pressure of 2,452.5 kPa (25 kg cm²) and at a temperature of 150°C for 10 min.

The cellophane tape and the rubber layer were peeled from the substrates, by pulling in a direction normal to the plane of the substrate plate. If the rubber layer did not readily peel, peeling was initiated with a knife. Thereafter, the surface of the metal plate was observed and the amount of rupture occurring in the rubber coating, as compared to areas of bare metal was noted. The portion of rupture in the rubber coating, termed the aggregation destruction ratio, is shown in Table I.

Next, a primer composition was prepared in the same manner as that described previously, except that no platinum compound was added. The characteristics of this primer composition were measured in the same manner as that described previously. These results are also shown in Table I as Comparative Example 1.

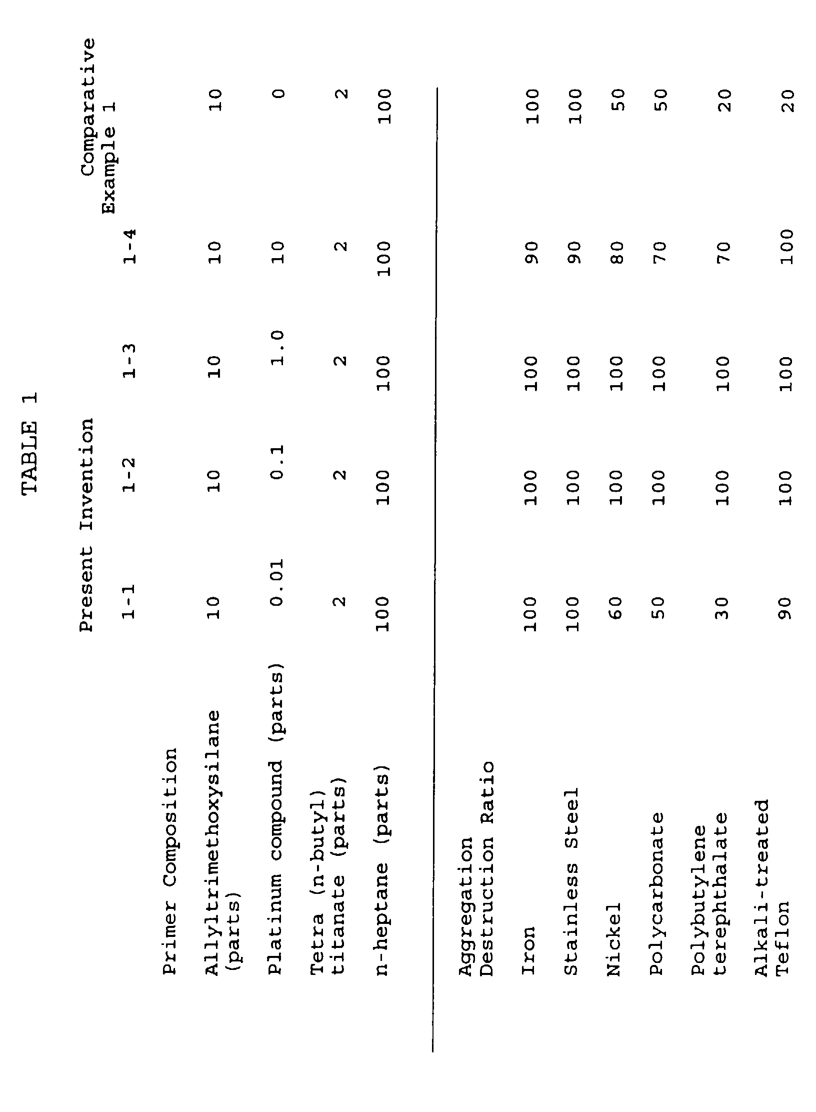

### Application Example 2

10 parts of hexenyltrimethoxysilane was added to 100 parts of n-heptane and uniformly mixed. 2 parts of tetra(n-butyl) titanate were added and uniformly mixed with the preceding. Next, to this solution, a complex of chloroplatinic acid and divinyltetramethyldisiloxane was added at an amount shown in Table II and uniformly mixed. A primer composition was obtained as a uniformly dispersed solution. This composition was coated on each side of an iron plate, a stainless steel plate, a nickel plate, a polycarbonate plate, and a polybutylene terephthalate plate. Prior to coating, each of the aforementioned plates had a piece of cellophane tape affixed to one end. The coated plates were allowed to stand at room temperature for 60 min and then air-dried.
100 parts of a dimethylvinylsiloxy- terminated dimethylpolysiloxane having a viscosity of 10,000 mm²/s (10,000 cS), 15 parts of fumed silica with a specific surface of 200 m²/g, 4 parts of hexamethyldisilazane, and 2 parts of water were uniformly mixed. The composition was then heated under vacuum to 170°C for 2 h, and a silicone rubber base compound was obtained. To this, 1.3 parts of a trimethylsiloxy-terminated dimethylsiloxane-methyl hydrogen siloxane copolymer (the content of hydrogen atoms bonded with silicon atoms being 0.7 wt%) and 10 ppm of platinum metal in the form of chloroplatinic acid, were added and mixed. An addition-reaction-setting silicone rubber composition was thus obtained. This silicone rubber composition was applied over the surface the previously-mentioned substrates at a thickness of about 2 mm. The silicone rubber was then cured onto the substrates at a pressure of 2,452.5 kPa (25 kg/cm²) and a temperature of 150°C for 10 min.
The rubber was again peeled from the substrate as described in connection with Application Example 1 and the aggregation destruction ratio measured, as reported in Table 2.

Furthermore, a primer composition was prepared in the same manner as that described previously, except that no platinum compound was added. The characteristics of this primer composition were measured in the same manner as that described previously. These results are also shown in Table II as Comparative Example 2.

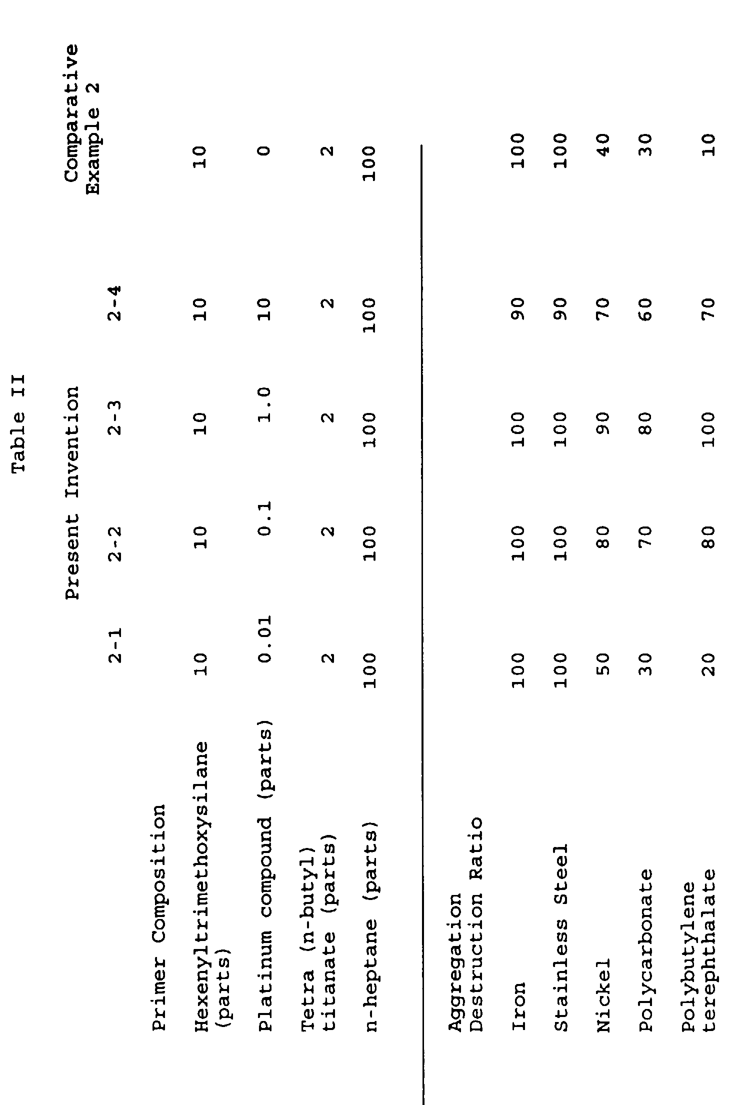

### Comparative Example 3

To 100 parts of n-heptane, 10 parts of vinyltrimethoxysilane were added and uniformly mixed. Next, 1 part of tetra(n-butyl) titanate was added and uniformly mixed. Next, to this solution, a complex of chloroplatinic acid and divinyltetramethyldisiloxane was added at an amount shown in Table III and uniformly mixed. A primer composition was obtained as a uniformly dispersed solution. This composition was coated on each side of an iron plate, a stainless steel plate, a nickel plate, a polycarbonate plate, and a polybutylene terephthalate plate. Prior to coating, each of the aforementioned plates had a piece of cellophane tape affixed to one end. The coated plates were allowed to stand at room temperature for 60 min and then air-dried.

An addition-curable silicone rubber was again prepared and coated and cured on the substrate plates as previously described. The rubber was again peeled from the substrate as described in connection with Application Examples 1 and 2 and the aggregation destruction ratio measured. The results are reported in Table III.

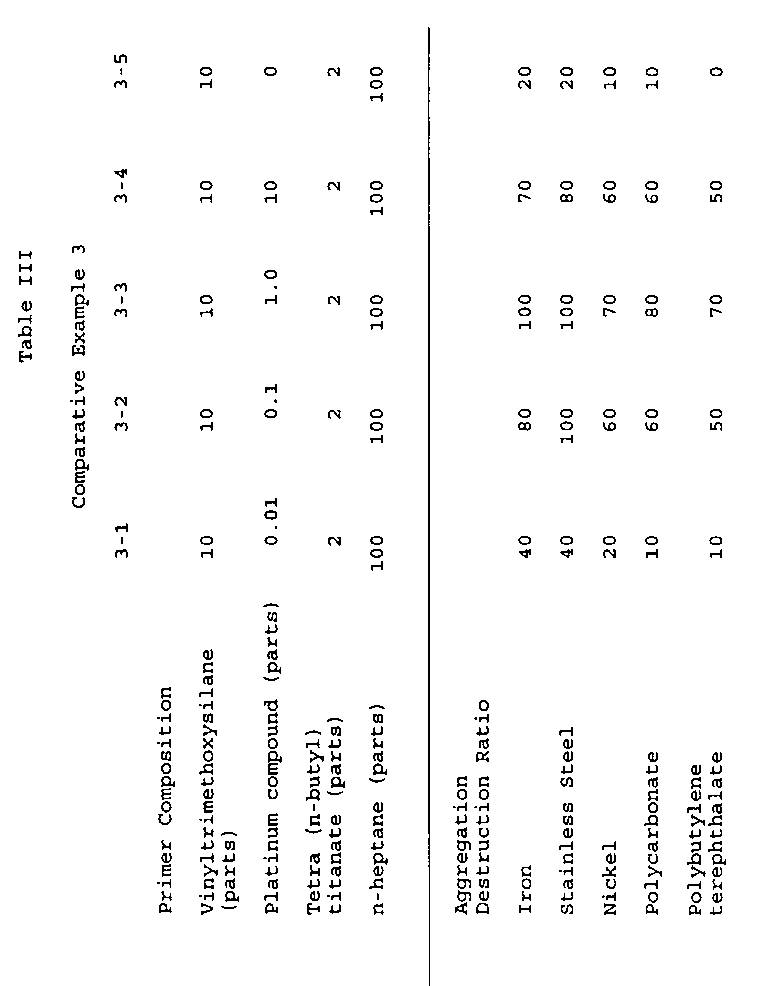

## Claims

1. A primer composition consisting of
(A) 100 parts, by weight, of an organosilicon compound selected from the group consisting of
(1) alkenyltrialkoxysilane represented by the general formula: RSi(OR¹)₃, wherein R is an alkenyl group with at least 3 carbon atoms and R¹ is an alkyl group or an alkoxylated alkyl group; and
(2) mild hydrolyzates of (1);
(B) 0.01-200 parts, by weight, of a platinum compound;
(C) 0.1-100 parts by weight of an organic titanic acid ester;
(D) a solvent capable of dissolving components (A) - (C); and optional one or more of the compounds selected from
(E) a hydrogen-functional siloxane of the empirical formula
R⁴ _{d}HₑSiO_{(4-d-e)/2}
wherein R⁴ is a monovalent hydrocarbon group, d has an average value of 0 ≤ d ≤ 3 and e has an average value of 1 ≤ e ≤ 3, with the proviso that 1 ≤ d+e ≤ 3; a diorganopolysiloxane (F) of the empirical formula
R⁵ _{f}SiO_{(4-f)/2}
wherein R⁵ is a monovalent hydrocarbon group, with the proviso that at least 0.2 mol% of said R⁵ groups are alkenyl groups and f is a number between 1.9 and 2.3; an organic peroxide; an inorganic filler; a heat resistance improver; and a pigment.

2. The composition of Claim 1 wherein said solvent (D) is selected from the group consisting of toluene, xylene, heptane, hexane, trichloroethylene, ethyl acetate, hexamethylcyclotrisiloxane, octamethylcyclotetrasiloxane, and decamethylcyclopentasiloxane.

3. The composition of claim 1 or 2 wherein said solvent (D) is present in an amount between about 10-100 parts by weight with respect to 100 parts by weight of component (A).

4. The composition of Claim 1 wherein said alkenyltrialkoxysilane (1) is selected from the group consisting of allyltrimethoxysilane, allyltriethoxysilane, allyltri(ethoxymethoxy)silane, butenyltrimethoxysilane, hexenyltrimethoxysilane and hexenyltriethoxysilane.

5. The composition of Claim 1 wherein said platinum compound (B) is selected from the group consisting of chloroplatinic acid, alcohol-modified chloroplatinic acid, complexes of platinum and a diketone, platinum-olefin complexes, and complexes formed from chloroplatinic acid and an alkenylsiloxane.

6. The composition of Claim 1 wherein said organic titanic acid ester (C) is selected from the group consisting of tetraisopropyl titanate, tetra-n-butyl titanate, butyl titanate dimer, tetra (2-ethylhexyl) titanate, diethoxytitanium bis (acetyl)acetonate, titanium diacetylacetonate, titanium diacetylacetonate, titanium octylglucoate, titanium lactate, titanium lactate ethyl ester, titanium triethanolaminate, mild hydrolyzates of the aforementioned and combinations thereof.

7. A method of adhering a thermosetting silicone rubber to a surface presented by a substrate comprising the steps of:
(I) coating said surface with the primer composition of Claim 1;
(II) exposing said coated surface to air until said primer composition dries;
(III) applying a thermosetting silicone rubber over said coated surface; and
(IV) heating said thermosetting silicone rubber to cause the same to cure.

8. A method in accordance with Claim 7 wherein said substrate is a metal.

9. A method in accordance with Claim 8 wherein said metal is selected from the group consisting of iron, stainless steel, aluminum, nickel, zinc and copper.

10. A method in accordance with Claim 7 said substrate is fabricated from a material selected from the group consisting of acryl resin, phenol resin, epoxy resin, polycarbonate resin, polybutylene terephthalate resin, alkali-treated Teflon® films, glass, and ceramics.

## Patentansprüche

1. Grundiermittelzusammensetzung, die aus den folgenden Bestandteilen besteht:
(A) 100 Gew.-Teile einer Organosiliciumverbindung, die aus (1) einem Alkenyltrialkoxysilan der allgemeinen Formel RSi(OR¹)₃, worin R eine Alkenylgruppe mit mindestens 3 Kohlenstoffatomen bedeutet und R¹ für eine Alkylgruppe oder eine alkoxylierte Alkylgruppe steht, und (2) schonenden Hydrolysaten von (1) ausgewählt ist;
(B) 0,01-200 Gew.-Teile einer Platinverbindung;
(C) 0,1-100 Gew.-Teile eines organischen Titansäureesters;
(D) ein Lösungsmittel mit der Fähigkeit zur Auflösung der Komponenten (A) bis (C);
und gegebenenfalls eine oder mehrere der Verbindungen, die aus
(E) einem wasserstoffunktionellen Siloxan der empirischen Formel
R⁴ _{d}HₑSiO_{(4-d-e)/2},
worin R⁴ für eine einwertige Kohlenwasserstoffgruppe steht, d einen Mittelwert von 0 ≤ d ≤ 3 aufweist und e einen Mittelwert von 1 ≤ e ≤ 3 aufweist, wobei gilt, daß 1 ≤ d+e ≤ 3 ist; einem Diorganopolysiloxan (F) der folgenden empirischen Formel
R⁵ _{f}SiO_{(4-f)/2},
worin R⁵ für eine einwertige Kohlenwasserstoffgruppe steht, wobei gilt, daß mindestens 0,2 Mol-% der Gruppen R⁵ Alkenylgruppen sind und feine Zahl zwischen 1,9 und 2,3 ist; einem organischen Peroxid; einem anorganischen Füllstoff; einem die Wärmebeständigkeit verbessernden Mittel und einem Pigment ausgewählt sind.

2. Zusammensetzung nach Anspruch 1, wobei das Lösungsmittel (D) aus Toluol, Xylol, Heptan, Hexan, Trichlorethylen, Ethylacetat, Hexamethylcyclotrisiloxan, Octamethylcyclotetrasiloxan und Decamethylcyclopentasiloxan ausgewählt ist.

3. Zusammensetzung nach Anspruch 1 oder 2, wobei das Lösungsmittel (D) in einer Menge zwischen etwa 10 und 100 Gew.-Teilen, bezogen auf 100 Gew.-Teile Komponente (A), vorhanden ist.

4. Zusammensetzung nach Anspruch 1, wobei das Alkenyltrialkoxysilan (1) aus Allyltrimethoxysilan, Allyltriethoxysilan, Allyltri(ethoxymethoxy)silan, Butenyltrimethoxysilan, Hexenyltrimethoxysilan und Hexenyltriethoxysilan ausgewählt ist.

5. Zusammensetzung nach Anspruch 1, wobei die Platinverbindung (B) aus Chloroplatin(IV)-säure, alkoholmodifizierter Chloroplatin(IV)-säure, Komplexen aus Platin und einem Diketon, Platin/Olefin-Komplexen und Komplexen, die aus Chloroplatin(IV)-säure und einem Alkenylsiloxan gebildet wurden, ausgewählt ist.

6. Zusammensetzung nach Anspruch 1, wobei der organische Titansäureester (C) aus Tetraisopropyltitanat, Tetra-n-butyltitanat, Butyltitanatdimer, Tetra(2-Ethylhexyl)titanat, Diethoxytitan-bis(acetyl)acetonat, Titandiacetylacetonat, Titandiacetylacetonat, Titanoctylglucoat, Titanlactat, Titanlactatethylester, Titantriethanolaminat, schonenden Hydrolysaten der oben genannten Verbindungen und Kombinationen hiervon ausgewählt ist.

7. Verfahren, um einen wärmehärtbaren Siliconkautschuk an einer durch ein Substrat bereitgestellten Oberfläche zum Haften zu bringen, das die folgenden Stufen umfaßt:
(I) Beschichten der Oberfläche mit der Grundiermittelzusammensetzung nach Anspruch 1;
(II) Einwirkenlassen von Luft auf die beschichtete Oberfläche, bis die Grundiermittelzusammensetzung trocknet;
(III) Applizieren eines wärmehärtbaren Siliconkautschuks auf die beschichtete Oberfläche und
(IV) Erwärmen des wärmehärtbaren Siliconkautschuks, um denselben zu härten.

8. Verfahren nach Anspruch 7, wobei das Substrat ein Metall ist.

9. Verfahren nach Anspruch 8, wobei das Metall aus Eisen, nichtrostendem Stahl, Aluminium, Nickel, Zink und Kupfer ausgewählt ist.

10. Verfahren nach Anspruch 7, wobei das Substrat aus einem Material hergestellt ist, daß aus Acrylharz, Phenolharz, Epoxyharz, Polycarbonatharz, Polybutylenterephthalatharz, alkalibehandelten Teflon®-Folien, Glas und Keramik ausgewählt ist.

## Revendications

1. Une composition de primaire constituée de
(A) 100 parties en poids d'un composé organosilicié choisi dans la classe formée par
(1) un alcényltrialcoxysilane représenté par la formule générale : RSi(OR¹)₃, où R est un groupe alcényle ayant au moins 3 atomes de carbone et R¹ est un groupe alkyle ou un groupe alkyle alcoxylé ; et
(2) les hydrolysats partiels de (1) ;
(B) 0,01 à 200 parties en poids d'un composé du platine ;
(C) 0,1 à 100 parties en poids d'un ester organique d'acide titanique ;
(D) un solvant capable de dissoudre les composants (A) à (C) ;
et facultativement un ou plusieurs des composés choisis parmi
(E) un siloxane à fonction hydrogène de la formule brute
R⁴ _{d}HₑSiO_{(4-d-e)/2}
où R⁴ est un groupe hydrocarboné monovalent, la valeur moyenne de d est telle que 0 ≤ d ≤ 3 et la valeur moyenne de e est telle que 1 ≤ e ≤ 3, avec la condition que 1 ≤ d+e ≤ 3 ; un diorganopolysiloxane (F) de la formule brute
R⁵ _{f}SiO_{(4-f)/2}
où R⁵ est un groupe hydrocarboné monovalent, avec la condition qu'au moins 0,2 mol % desdits groupes R⁵ soient des groupes alcényles, et f est un nombre compris entre 1,9 et 2,3 ; un peroxyde organique ; une charge minérale ; un agent améliorant la résistance à la chaleur ; et un pigment.

2. La composition de la revendication 1, dans laquelle ledit solvant (D) est choisi dans la classe formée par le toluène, le xylène, l'heptane, l'hexane, le trichloréthylène, l'acétate d'éthyle, l'hexaméthylcyclotrisiloxane, l'octaméthylcyclotétrasiloxane et le décaméthylcyclopentasiloxane.

3. La composition de la revendication 1 ou 2, dans laquelle ledit solvant (D) est présent en une quantité comprise entre environ 10 et 100 parties en poids pour 100 parties en poids du composant (A).

4. La composition de la revendication 1, dans laquelle ledit alcényltrialcoxysilane (1) est choisi dans la classe formée par l'allyltriméthoxysilane, l'allyltriéthoxysilane, l'allyltri(éthoxyméthoxy)silane, le butényltriméthoxysilane, l'hexényltriméthoxysilane et l'hexényltriéthoxysilane.

5. La composition de la revendication 1, dans laquelle ledit composé du platine (B) est choisi dans la classe formée par l'acide chloroplatinique, l'acide chloroplatinique modifié par un alcool, les complexes de platine et d'une dicétone, les complexes platine-oléfine et les complexes formés à partir d'acide chloroplatinique et d'un alcénylsiloxane.

6. La composition de la revendication 1, dans laquelle ledit ester organique d'acide titanique (C) est choisi dans la classe formée par le titanate de tétraisopropyle, le titanate de tétra-n-butyle, le dimère de titanate de butyle, le titanate de tétra(2-éthylhexyle), le bis(acétyl)acétonate de diéthoxytitane, le diacétylacétonate de titane, le diacétylacétonate de titane, l'octylglucoate de titane, le lactate de titane, l'ester éthylique de lactate de titane, le triéthanolaminate de titane, les hydrolysats partiels des précédents, et leurs associations.

7. Un procédé pour faire adhérer un caoutchouc de silicone thermodurcissable à une surface présentée par un substrat, comprenant les étapes suivantes :
(I) enduire ladite surface avec la composition de primaire de la revendication 1 ;
(II) exposer à l'air ladite surface enduite jusqu'à ce que ladite composition de primaire sèche ;
(III) appliquer un caoutchouc de silicone thermodurcissable sur ladite surface enduite ; et
(IV) chauffer ledit caoutchouc de silicone thermodurcissable pour provoquer son durcissement.

8. Un procédé selon la revendication 7, dans lequel ledit substrat est un métal.

9. Un procédé selon la revendication 8, dans lequel ledit métal est choisi dans la classe formée par le fer, l'acier inoxydable, l'aluminium, le nickel, le zinc et le cuivre.

10. Un procédé selon la revendication 7, dans lequel ledit substrat est constitué d'un matériau choisi dans la classe formée par une résine acrylique, une résine phénolique, une résine époxy, une résine polycarbonate, une résine de polytéréphtalate de butylène, les pellicules de Teflon® traitées par un alcali, le verre et les matériaux céramiques.
